**Europäisches Patentamt**

**European Patent Office**

**Office européen des brevets**

(19)

(11) Veröffentlichungsnummer: **0 409 187 A1**

## (12) EUROPÄISCHE PATENTANMELDUNG

(21) Anmeldenummer: 90113725.7

(22) Anmeldetag: 18.07.90

(51) Int. Cl.5: **F02B 47/02**, F02D 19/00

(30) Priorität: 20.07.89 DE 3924013

(43) Veröffentlichungstag der Anmeldung:
**23.01.91 Patentblatt 91/04**

(84) Benannte Vertragsstaaten:
**DE FR GB IT SE**

(71) Anmelder: **FORSCHUNGSZENTRUM JÜLICH**

**GMBH**
**Wilhelm-Johnen-Strasse**
**D-5170 Jülich(DE)**

(72) Erfinder: **Förster, Siegfried, Dr.**
**Ottenfeld 1**
**D-5110 Alsdorf(DE)**

(54) **Verfahren zum Betreiben eines Kolbenmotors und Einrichtung zur Zuführung eines unter Druck stehenden Brennstoffdampf/Wasserdampf-Gemisches.**

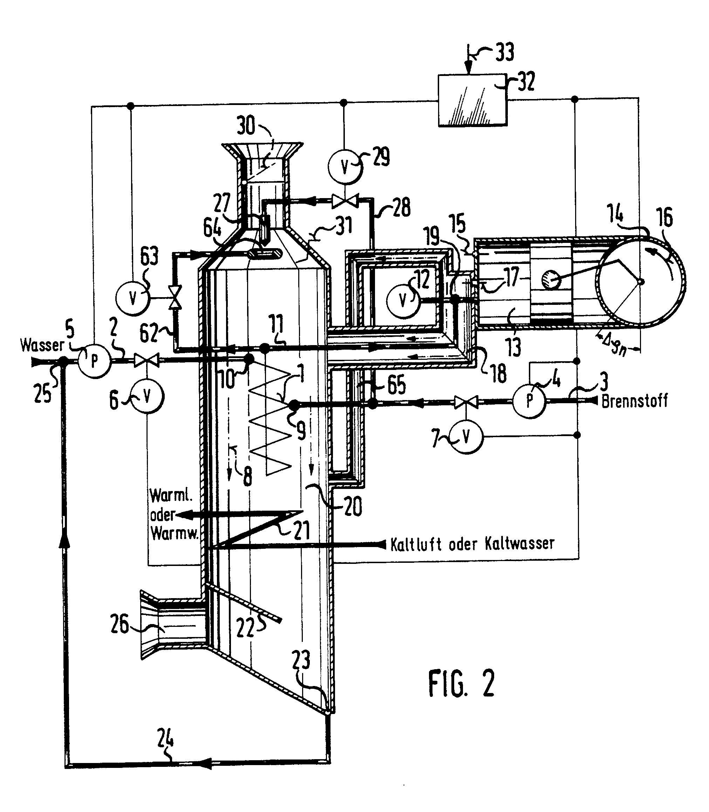

(57) Zum Antrieb eines Kolbenmotors wird ein unter Druck stehendes Brennstoff/Wasserdampf-Gemisch in vorkomprimierte Verbrennungsluft eingegeben. Das Brennstoff/Wasserdampf-Gemisch wird in den Zylinderraum (13, Figur 2) des Kolbenmotors (14) noch vor Erreichen des oberen Kolbentotpunktes bei einem Druck injiziert, der unterhalb des maximalen Kompressionsdruckes bleibt. Der Injektionsbeginn wird bei vorgegebenen Brennstoffgehalt im Brennstoff/Wasserdampf-Gemisch in Abhängigkeit vom gewünschten Fettungsgrad des im Zylinderraum zu zündenden Brennstoffdampf/Wasserdampf/Verbrennungsluft-Gemisches sowie in Abhängigkeit von der verbleibenden Druckdifferenz zwischen dem Druck des Brennstoffdampf/Wasserdampf-Gemisches und dem Kompressionsdruck im Zylinderraum eingestellt. Zur Steuerung der Injektion ist als Injektionventil (12) ein regelbares Magnetventil vorgesehen. Zur Dosierung von Brennstoff und Wasser sind die Brennstoffzufuhr (3) und die Wasserzufuhr (2) mit getackteten Magnetventilen (6, 7) ausgerüstet.

FIG. 2

EP 0 409 187 A1

## VERFAHREN ZUM BETREIBEN EINES KOLBENMOTORS UND EINRICHTUNG ZUR ZUFÜHRUNG EINES UNTER DRUCK STEHENDEN BRENNSTOFFDAMPF/WASSERDAMPF-GEMISCHES

Die Erfindung bezieht sich auf ein Verfahren zum Betreiben eines Kolbenmotors unter Zuführung eines unter Druck stehenden Brennstoffdampf/Wasserdampf-Gemisches zum Zylinderraum des Kolbenmotors. Das Brennstoffdampf/Wasserdampf-Gemisch wird in vorkomprimierte Verbrennungsluft injiziert, noch bevor der obere Kolbentotpunkt erreicht ist. Zur Injektion weist das Brennstoffdampf/Wasserdampf-Gemisch einen höheren Druck auf als die vorkomprimierte Verbrennungsluft im Zylinderraum. Gegenstand der Erfindung ist auch eine Einrichtung zum Zuführen des Brennstoffdampf/Wasserdampf-Gemisches und ein elektromagnetisches Injektionsventil zur Durchführung des Verfahrens.

Es ist bekannt, ein unter Druck stehendes Brennstoffdampf/Wasserdampf-Gemisch zum Betreiben eines Kolbenmotors in dessen Zylinderraum zu injizieren. In DE-OS 37 34 346 wird beschrieben, daß dazu das Brennstoffdampf/Wasserdampf-Gemisch durch Verwerten von Abgaswärme erzeugt wird und -ohne zuvor mit Verbrennungsluft vermischt zu werden - direkt aus einem Dampfgemischerzeuger in den Zylinderraum eingeführt wird. Das Brennstoffdampf/Wasserdampf-Gemisch wird während des Kompressionshubes des Kolbenmotors in vorkomprimierte Verbrennungsluft gedrückt und anschließend im Zylinderraum gezündet.

Zur Erzeugung des für die Injektion notwendigen Druckes im Brennstoffdampf/Wasserdampf-Gemisch dienen Förderpumpen, die das Wasser bzw. den flüssigen Brennstoff dem Dampfgemischerzeuger zuführen.

Von Bedeutung ist die Regelung zur Zuführung des erforderlichen Brennstoffdampf/Wasserdampf-Gemisches. Beim bekannten Verfahren wird der Druck des Brennstoffdampf/Wasserdampf-Gemisches höher als der maximale Kompressionsdruck im Zylinderraum eingestellt. Zur Gemischregulierung bei unterschiedlichen Motorleistungen und Motordrehzahlen ist wegen der jeweils anzupassenden Öffnungszeit des Injektionsventils ein hoher Regelaufwand erforderlich. Darüber hinaus ist infolge des erforderlichen hohen Druckes im Brennstoffdampf/Wasserdampf-Gemisch die Gemischerzeugung problematisch, da mit zunehmendem Druck die Brennstoffverdampfungstemperatur ansteigt und im Dampfgemischerzeuger bei Erhöhung der Temperatur mit Ausscheidungen von Koksteilchen aus dem Brennstoff zu rechnen ist und nichtverdampfbare Brennstofffraktionen gebildet werden können.

Aufgabe der Erfindung ist es, einem Kolbenmotor ein Brennstoffdampf/Wasserdampf-Gemisch in der Weise zuzuführen, daß einerseits das Brennstoffdampf/Wasserdampf-Gemisch während des Kompressionshubes noch vor Erreichen des oberen Totpunktes in den Zylinderraum gelangt, andererseits sich aber auch die Regelung zur Zufuhr des Brennstoffdampf/Wasserdampf-Gemisches bei unterschiedlichen Motorleistungen und Motordrehzahlen einfach gestaltet.

Diese Aufgabe wird gemäß der Erfindung bei einem Verfahren der eingangs genannten Art durch die in Patentanspruch 1 angegebenen Maßnahmen gelöst. Das Brennstoffdampf/Wasserdampf-Gemisch wird in die vorkomprimierte Verbrennungsluft mit einem Druck injiziert, der größer ist als der höchste Kompressionsdruck. Dabei wird bei vorgegebenem Brennstoffgehalt im Brennstoffdampf/Wasserdampf-Gemisch der Injektionsbeginn in Abhängigkeit vom gewünschten Fettungsgrad des im Zylinderraum zu zündenden Brennstoffdampf/Wasserdampf/Verbrennungsluft-Gemisch sowie in Abhängigkeit von verbleibender Druckdifferenz zwischen Druck des Brennstoffdampf/Wasserdampf-Gemisches und Kompressionsdruck im Zylinderraum eingestellt.

In Ausgestaltung der Erfindung wird nach Patentanspruch 2 das Brennstoffdampf/Wasserdampf-Gemisch in den Zylinderraum während des Kompressionshubes innerhalb eines variablen, die Öffnungszeit des Injektionsventils bestimmenden Zeitintervalls injiziert, dessen Betrag bei vorgegebenem Brennstoffgehalt im Brennstoffdampf/Wasserdampf-Gemisch in Abhängigkeit vom gewünschten Fettungsgrad des im Zylinderraum zu zündenden Brennstoffdampf/Wasserdampf/Verbrennungsluft-Gemisches eingestellt wird, wobei der Öffnungszeitpunkt des Injektionsventils regelbar, der Schließzeitpunkt vom gegebenen Druck des Brennstoffdampf/Wasserdampf-Gemisches und vom Druckverlauf während des Kompressionshubes bestimmt ist. Eine gewünschte Veränderung der Motorleistung und der Motordrehzahl durch eine entsprechende Gemischeinstellung des im Zylinderraum zu zündenden Brennstoffdampf/Wasserdampf/Verbrennungsluft-Gemisches wird so allein durch Steuerung des Öffnungszeitpunktes des Injektionsventils geregelt. Bei Vorverlegen des Öffnungszeitpunktes wird quantitativ mehr Brennstoff in den Zylinderraum eingeführt, so daß bei gleichbleibend angesaugter Verbrennungsluftmenge der Brennstoffgehalt im zu zündenden Gasgemisch ansteigt. Der Schließzeitpunkt des Injektionsventils wird dagegen unabhängig vom Brennstoffbedarf ausschließlich vom gegebenen Druck im Brennstoffdampf/Wasserdampf-Gemisch bestimmt. Das Injektionsventil schließt, bevor der Kompressionsdruck den Druck des Brennstoffdampf/Wasserdampf-Gemisches übersteigt. Der Druck im Brennstoffdampf/Wasserdampf-Gemisch wird dabei so eingestellt, daß Koksbildung oder die Ausbildung nichtverdampfbarer Brennstofffraktionen bei der Erzeugung des Brennstoffdampf/Wasserdampf-Gemisches vermieden werden.

In weiterer Ausbildung des erfindungsgemäßen Verfahrens ist es nach Patentanspruch 3 vorgesehen, den Schließzeitpunkt des Injektionsventils so festzulegen, daß das Injektionsventil schließt, wenn der Druck des Brennstoffdampf/Wasserdampf-Gemisches den Kompressionsdruck im Zylinderraum erreicht. Der Öffnungszeitpunkt des Injektionsventils wird zweckmäßig über die Kurbelstellung des Kolbenmotors, den Kurbelwinkel gesteuert, Patentanspruch 4.

Um das zu zündende Brennstoffdampf/Wasserdampf-Verbrennungsluft-Gemisch nicht unzulässig anzufetten, ist die maximale Öffnungszeit des Injektionsventils entsprechend begrenzt, Patentanspruch 5.

Zur Durchführung des erfindungsgemäßen Verfahrens wird gemäß Patentanspruch 6 von einer Einrichtung ausgegangen, die zum Zuführen eines unter Druck stehenden Brennstoffdampf/Wasserdampf-Gemisches zum Zylinderraum eines Kolbenmotors einen Dampfgemischerzeuger aufweist, in den je eine Brennstoff- und Wasserzufuhr münden, die jeweils druckseitig an einer Brennstoffpumpe für flüssigen Brennstoff bzw. an einer Wasserpumpe zur Einleitung des im Dampfgemischerzeuger zu verdampfenden Wassers angeschlossen sind.

Vom Dampfgemischerzeuger führt eine Dampfgemischleitung für das im Dampfgemischerzeuger gebildete Brennstoffdampf/Wasserdampf-Gemisch zu einem Injektionsventil, das am Kolbenmotor jeweils am Zylinder angeschlossen ist und im Zylinderraum mündet. Eine Einrichtung dieser Art ist - in gleicher Weise wie das oben erwähnte, vorbekannte Verfahren - aus DE-OS 37 34 346 bekannt.

Zur Regelung des Zeitintervalls für die Öffnungszeit des Injektionsventils ist die Einrichtung mit einem elektromagnetisch regelbaren Magnetventil und zur Dosierung von Brennstoff- und Wassermenge beim Zuführen flüssigen Brennstoffs und Wassers zum Dampfgemischerzeuger mit der Motordrehzahl entsprechend getacktet gesteuerten Magnetventilen ausgerüstet. Die elektrische bzw. elektronische Ansteuerbarkeit der Magnetventile ermöglicht ein exaktes Einstellen des Brennstoffdampf/Wasserdampf-Gemisches auf sich rasch verändernde Anforderungen an Motorleistung und Motordrehzahl. Bevorzugt werden als Injektionsventile Magnetventile mit Öffnungszeiten im Bereich zwischen 5 und 10 ms eingesetzt, Patentanspruch 7.

Der Druck in der am Injektionsventil angeschlosse nen Dampfgemischleitung zum Zuführen des Brennstoffdampf/Wasserdampf-Gemisches zum Zylinderraum ist zweckmäßig in den Grenzen zwischen einem maximalen Druck, der kleiner ist als der maximale Druck im Zylinderraum bei Vollast, und einem minimalen Druck einstellbar, der wenig unterhalb des beim Schleppbetrieb oder beim Anlassen des Motors gegebenen maximalen Drucks im Zylinderraum liegt. Der Druck zur Zufuhr von Brennstoff und Wasser wird von der Brennstoffpumpe und der Wasserpumpe erzeugt, die den flüssigen Brennstoff bzw. die benötigte Wassermenge zum Dampfgemischerzeuger befördern. Beide Pumpen sind nach Patentanspruch 8 so ausgelegt, daß ein Druck zwischen 5 und 20 bar in Brennstoff- und Wasserzufuhr einstellbar sind.

Wesentlich ist, daß das im Dampfgemischerzeuger gebildete Dampfgemisch auf seinem Strömungsweg bis zum Zylinderraum durch Abkühlung auch nicht teilweise wieder kondensiert. Um dies zu vermeiden, ist es nach Patentanspruch 9 vorteilhaft, das Injektionsventil insbesondere mit dem Abgas des Kolbenmotors zu beheizen. Für die Startphase des Motors kann zusätzlich eine Beheizung mit Heißgas vorgesehen sein. Bei Verwendung des Motorabgases zur Erwärmung des Injektionsventils strömt das Abgas in zweckmäßiger Weise erst im Anschluß daran zum Dampfgemischerzeuger, um diesen zu erwärmen, Patentanspruch 10.

Die Restwärme des Abgases nach Erwärmung des Injektionsventils und Wärmeabgabe im Dampfgemischererzeuger kann schließlich noch in einem Rekuperator zur Erzeugung von Warmluft oder Warmwasser genutzt werden, Patentanspruch 11. Im Rekuperator wird das Abgas unter die Taupunkttemperatur des im Abgas ent haltenen Wasserdampfes abgekühlt. Das dabei kondensierte Wasser wird zweckmäßig zur Ausbildung des Brennstoffdampf/ Wasserdampf-Gemisches erneut genutzt.

Die Erfindung wird nachfolgend anhand von Ausführungsbeispielen näher erläutert, die auch weitere Ausbildungen der Erfindung zeigen, insbesondere ein zur Durchführung des Verfahrens geeignetes elektromagnetisch ansteuerbares Injektionsventil. Die Zeichnung zeigt schematisch im einzelnen:

Figur 1 Darstellung der Injektion des Brennstoffdampf/Wasserdampf-Gemisches in Abhängigkeit vom Verlauf des Kompressionsdruckes p während eines Kompressionshubes eines Kolbenmotors;

Figur 2 Einrichtung zum Zuführen des Brennstoffdampf/Wasserdampf-Gemisches;

Figur 3 Elektromagnetisches Injektionsventil.

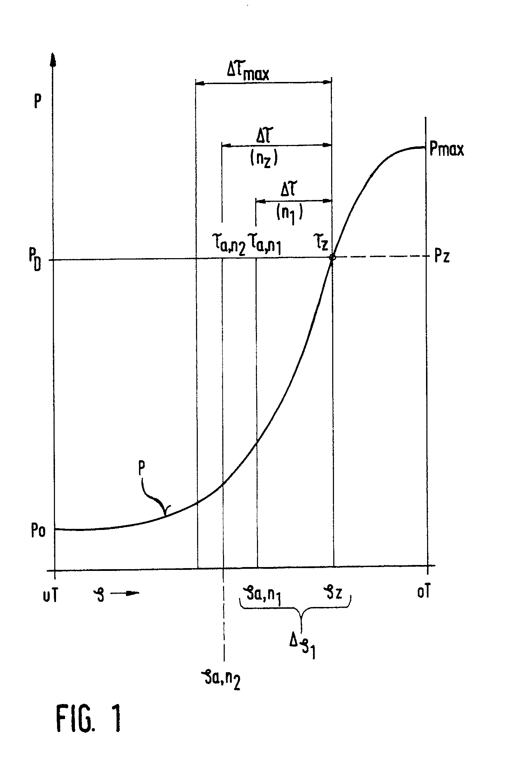

Figur 1 zeigt die Injektion des Brennstoffdampf/Wasserdampf-Gemisches in den Zylinderraum eines Kolbenmotors bei dessen Kompressionshub. In Figur 1 ist der Verlauf des Kompressionsdruckes p über der Kurbelstellung qualitativ dargestellt. Für die Kurbelstellung ist der jeweilige Kurbelwinkel $\phi$ angegeben. Der Kompressionsdruck p steigt vom unteren Totpunkt uT bis zum oberen Totpunkt oT des Kolbens exponentiell von einem unteren Kompressionsdruck $p_O$ bis zu einem maximalen Kompressionsdruck $p_{max}$ an.

Im Ausführungsbeispiel ist für das erzeugte Brennstoffdampf/Wasserdampf-Gemisch ein Dampfgemischdruck $P_D$ gegeben. Der Dampfgemischdruck $P_D$ ist kleiner als der maximale Kompressionsdruck $p_{max}$ Der Wert des Dampfgemischdruckes $P_D$ bestimmt den Schließzeitpunkt $\tau_z$ für das Injektionsventil. Der Schließzeitpunkt ist so zu wählen, daß beim Schließen des Injektionsventils der Dampfgemischdruck $P_D$ größer oder gleich dem Kompressionsdruck $p_z$ ist. In Figur 1 sind beim Schließen des Injektionsventils Dampfgemischdruck $P_D$ und Kompressionsdruck $p_z$ gleich groß.

Ausgehend vom gegebenen Schließzeitpunkt $\tau_z$ ist der Öffnungszeitpunkt $\tau_a$ des Injektionsventils festzulegen. Dabei ist die Öffnungszeitd $\Delta\tau$ des Injektionsventils = ($\Delta\tau = \tau_a - \tau_z$) vom erforderlichen Fettungsgrad des Brennstoffdampf/Wasserdampf/Verbrennungsluft-Gemisches abhängig. Bei vorgegebenem Brennstoffanteil im Brennstoffdampf/Wasserdampf-Gemisch und vorgegebener, vom Kolbenmotor beim Saughub angesaugten Verbrennungsluftmenge ist die Öffnungszeit der gewünschten Änderung des Fettungsgrades proportional anzupassen: Ist der Fettungsgrad zu verringern, ist der Öffnungszeitpunkt gegenüber dem Zeitpunkt bei Erreichen des oberen Totpunktes später zu legen, d.h. die Öffnungszeit ist zu verkürzen, dagegen ist zur Steigerung des Fettungsgrades die Öffnungszeit zu verlängern. Um ein Überfetten des Brennstoffdampf/Wasserdampf-Verbrennungsluft-Gemisches zu vermeiden, ist die Öffnungszeit auf einen Maximalwert $\Delta\tau_{max}$ begrenzt.

Mit der vom Fettungsgrad bestimmten Öffnungszeit $\Delta\tau$ ist - wegen des bereits festgelegten Schließzeitpunktes $\tau_z$ - nunmehr auch der Öffnungszeitpunkt $\tau_a$ gegeben. In Figur 1 ist das Öffnen und Schließen des Injektionsventils über dem Kurbelwinkel einge tragen. Ausgehend von der festliegenden Kurbelstellung für den Schließzeitpunkt $\tau_z$, die sich aus der Bedingung Kompressionsdruck $p_z$ = Dampfdruck $P_D$ des Brennstoffdampf/Wasserdampf-Gemisches ergibt, und dem festgelegten Betrag für die Öffnungszeit

$\Delta\tau$ ist somit das Injektionsventil beim Kurbelwinkel $\phi_a$ zu öffnen.

Der aufgrund der Motorleistung festgelegte Betrag für die Öffnungszeit $\Delta\tau$ bedingt nun allerdings je nach Motordrehzahl das Öffnen des Injektionsventils bei einer anderen Kurbelstellung. Das Injektionsventil muß bei höherer Motordrehzahl bei einer früher liegenden Kurbelstellung geöffnet werden, soll bei der höheren Motordrehzahl die gleiche Öffnungszeit $\Delta\tau$ erreicht und somit die gleiche Brennstoffmenge eingeführt werden. In Figur 1 ist für einen bestimmten Betrag der Öffnungszeit $\Delta\tau$ bei einer Motordrehzahl $n_1$ ein Kurbelwinkelbereich $\Delta\phi_1$ eingetragen, innerhalb dessen das Injektionsventil ab einem Kurbelwinkel $\phi_a$ $n_1$ zum Öffnungszeitpunkt $\tau a$, $n_1$ bis zum Schließzeitpunkt $\tau_z$ beim Kurbelwinkel $\phi_z$ geöffnet ist. Bei einer Motordrehzahl $n_2$ mit $n_2 > n_1$ und gleichem Schließzeitpunkt $\tau_z$ bzw. Kurbelwinkel $\phi_z$ wie vorher ist das Injektionsventil, um über die gleiche Öffnungszeit $\Delta\tau$ geöffnet zu sein, zu einem früheren Öffnungszeitpunkt $\tau_a$, $n_2$ bzw. Kurbelwinkel $\phi_a$, $n_2$ zu öffnen. Da nun einem bestimmten Betrag von $\Delta\tau$ eine bestimmte zugeführte Brennstoffmenge entspricht und damit eine bestimmte Motorleistung gegeben ist, läßt sich also lediglich durch Wahl von $\Delta\tau$ bzw. von $\phi_a$ bei festem Schließzeitpunkt $\tau_z$ die Motorleistung variieren.

Der Dampfdruck $P_D$ des Brennstoffdampf/Wasserdampf-Gemisches ist der jeweils gewünschten Leistung anpaßbar. Bei hoher Motorleistung kann $P_D$ entsprechend hoch sein, bei kleiner Motorleistung ist $P_D$ entsprechend einzustellen. Stets bleibt $P_D$ aber jeweils geringer als der sich im Zylinderraum einstellende maximale Kompressionsdruck $p_{max}$. Wird bei konstantem Flüssigkeitsdruck für die Zufuhr von Brennstoff und Wasser zum Dampfgemischerzeuger gearbeitet, dann kann bei festgehaltenem Injektionszeitpunkt der Motor z.B. bei Lastabwurf nicht beliebig durchdrehen, weil die effektive Injektionszeit bei steigender Lastabwurfdrehzahl immer kleiner wird und somit sich auch die zugeführte Brennstoffmenge verringert.

In Figur 2 ist in schematischer Darstellung eine Einrichtung zur Durchführung des erfindungsgemäßen Verfahrens wiedergegeben. Zur Erzeugung eines Brennstoffdampf/Wasserdampf-Gemisches dient ein Dampfgemischerzeuger 1, dem zu verdampfendes Wasser über eine Wasserzufuhr 2 und flüssiger Brennstoff über eine Brennstoffzufuhr 3 zuströmt. Der Brennstoff wird von einer Brennstoffpumpe 4 aus einem in Figur 2 nicht dargestellten Brennstofftank, das Wasser von einer Wasserpumpe 5 aus einem Wassertank angesaugt, der ebenfalls nicht dargestellt ist. Zur Dosierung von Wasser-und Brennstoffmenge dienen zwei elektromagnetisch getaktet betriebene Magnetventile, Magnetventil 6 für die Zufuhr des Wassers, Magnetventil 7 für die Zufuhr des Brennstoffs. Zweckmäßigerweise werden die Taktfrequenzen beim Motorbetrieb auf einen gewählten Wert eingestellt.

Die Verdampfung von Wasser und Brennstoff im Dampfgemischerzeuger 1 erfolgt unter Ausnutzung von Ab gaswärme. Der Abgasstrom 8 ist in Figur 2 durch strichpunktierte Linienzüge markiert. Im Dampfgemischerzeuger 1 wird die Verdampfung bei abwärts gerichteter Strömung durchgeführt, Wasser und Brennstoff strömen im Dampferzeuger 1 bei ihrer Verdampfung beide nach unten. Im Dampfgemischerzeuger 1 wird zunächst überhitzter Wasserdampf erzeugt, anschließend wird der flüssige Brennstoff zugegeben. Die Brennstoffzufuhr 3 mündet deshalb mit ihrem Anschluß 9 unterhalb eines Anschlusses 10 für die Wasserzufuhr 2 in den Dampfgemischerzeuger 1.

Ein Dampfgemischerzeuger der vorbeschriebenen Art ist beispielsweise aus DE-PS 36 26 933 bekannt. Es lassen sich bei dieser Ausbildung sich absetzende Crackprodukte und eine Veränderung der Brennstoffkonsistenz beim Verdampfen des Brennstoffs vermeiden.

Das im Dampfgemischerzeuger 1 gebildete Brennstoffdampf/Wasserdampf-Gemisch wird in einer Dampfgemischleitung 11 zu einem Injektionsventil 12 geführt, für das ein elektromagnetisch ansteuerbares Magnetventil eingesetzt ist. Beim Öffnen des Injektionsventils 12 strömt das Brennstoffdampf/Wasserdampf-Gemisch in einen Zylinderraum 13 eines Kolbenmotors 14 ein. Es wird beim Kompressionshub des Kolbenmotors in vorkomprimierte Verbrennungsluft eingeführt, die beim Saughub des Kolbenmotors bei geöffnetem Saugventil 15 über in Figur 2 nicht dargestellte Luftfilter aus der Umgebung des Kolbenmotors angesaugt wird. Ein Kurbelwinkelbereich $\Delta\phi_n$, über den das Injektionsventil 12 während des Kompressionshubes zur Zufuhr von Brennstoffdampf/Wasserdampf-Gemisch geöffnet ist, ist in Figur 2 am Kolbenmotor 14 schematisch wiedergegeben. Pfeil 16 gibt die Dreh richtung der Kurbelwelle des Kolbenmotors an. Im Ausführungsbeispiel läßt sich das Injektionsventil 12 bei verschiedenen Kurbelwinkeln innerhalb eines Kurbelwinkelbereiches zwischen ca. 180° bis 20° vor dem oberen Kolbentotpunkt öffnen.

Das im Zylinderraum 13 sich bildende Brennstoffdampf/Wasserdampf/Verbrennungsluft-Gemisch wird im Zylinderraum gezündet. Hierzu erforderliche Zündeinrichtungen sind in Figur 2 nicht dargestellt. Das bei der Verbrennung des Gasgemisches entstehende Abgas wird nach Öffnen eines Auslaßventiles 17 aus dem Zylinderraum 13 in ein Abgasrohr 18 ausgestoßen. Das abzuführende Abgas umströmt zunächst im Injektionsventil 12 einen Anschluß 19 für die Dampfgemischleitung 11 und anschließend die innerhalb des Abgasrohres 18 verlegte Dampfgemischleitung 11 selbst, bevor es in einen Abgaskanal 20 austritt, in dem der Dampfgemischerzeuger 1 angeordnet ist. In Figur 2 ist das Abgasrohr 18 schematisch dargestellt. Es kann durch das Injektionsventil auch nur ein Teil des Abgases hindurchgeführt werden. Zum Injektionsventil 12 führt in diesem Fall nur ein Bypaß des Abgasrohres 18. Das Abgas strömt somit entweder direkt zur Dampfgemischleitung 11 oder über den Dampfgemischerzeuger 1 in den Abgaskanal 20 ab.

Nach Wärmeabgabe an den Dampfgemischerzeuger 1 wird das den Dampferzeuger durchströmende Abgas zusammen mit dem übrigen Teil des Abgases des Kolbenmotors noch zu einem Rekuperator 21 zur Erzeugung von Warmluft oder Warmwasser geführt. Im Rekuperator 21 kühlt das Abgas bis unter Taupunkttemperatur des in ihm enthaltenden Wasserdampfes ab. Der Rekuparator besteht deshalb aus nichtkorrodierendem Material, ins besondere aus Keramik. Das im Rekuperator 21 kondensierte Wasser wird von einem Kondensatblech 22 aufgefangen und über einen Kondensatablauf 23 mit Kondensatleitung 24 abgezogen. Die Kondensatleitung ist im Ausführungsbeispiel zur Wasserzufuhr 2 zurückgeführt und mündet am Anschluß 25 saugseitig an der Wasserpumpe 5. Zur Erzeugung des Brennstoffdampf/Wasserdampf-Gemisches wird bei Bedarf entsalztes Wasser verwendet, um Kalkablagerungen im System weitgehend zu vermeiden.

Das trockene Abgas strömt über einen Abgasauslaß 26 in die Umgebung ab.

Im Ausführungsbeispiel ist oberhalb des Dampfgemischerzeugers 1 noch eine Brennstoffdüse 27 angebracht, die zum Start des Dampfmischerzeugers 1 zur Erzeugung eines brennbaren Gasgemisches dient, wenn noch kein Abgas vom Kolbenmotor zur Ausbildung des Brennstoffdampf/Wasserdampf-Gemisches zur Verfügung steht. In einer an die Brennstoffzufuhr 3 angeschlossenen Brennstoffleitung 28 ist ein Startventil 29 eingesetzt, das beim Start zur Zuleitung von Brennstoff zur Brennstoffdüse 27 geöffnet wird. Die zur Verbrennung des Brennstoffs erforderliche Verbrennungsluft wird von einem nicht dargestellten Gebläse durch Öffnen einer Startklappe 30 zugeführt. Zur Zündung des Gemisches dient eine elektrische Zündeinrichtung 31.

Wird nach ausreichender Erwärmung des Dampfgemischerzeugers 1 ein nutzbares Brennstoffdampf/Wasserdampf-Gemisch erzeugt, so wird dieses Dampfgemisch im Ausführungsbeispiel im Raum oberhalb des Dampfgemischerzeugers verbrannt, die Brennstoffdüse 27 wird abgeschaltet. Das Brennstoffdampf/Wasserdampf-Gemisch kann außer zum Injektionsventil 12 auch in einer Zweigleitung 62 über ein Drosselventil 63 zu einer Ringdüse 64 geführt und dort mit der einströmenden Verbrennungsluft verbrannt werden. Das so erzeugte Heißgas dient dann zur weiteren Vorwärmung des Injektionsventils und der Dampfgemischleitung, bis der Motor gestartet ist. Das Heißgas strömt im Abgasrohr 18 in entgegengesetzter Richtung zum in Figur 2 eingezeichneten Abgasstrom und wird nach Durchströmen des Injektionsventils in einer Rückleitung 65 zurück in den Abgaskanal 20 geleitet, in den es in Strömungsrichtung des Heißgases gesehen noch vor dem Rekuperator 21 eintritt.

Zur Regelung der Einrichtung dient ein Steuergerät 32, das aufgrund eines Eingangsignals 33, das der erforderlichen Motorleistung und der jeweils gegebenen Motordrehzahl analog ist, alle Regelungsvorgänge und entsprechende Aggregate steuert, wie zur Brennstoff- und Wasserzufuhr Brennstoffpumpe 4 und getacktetes Magnetventil 7, bzw. Wasserpumpe 5 und getacktetes Magnetventil 6, sowie die Öffnungszeit des Injektionsventils 12 in Abhängigkeit von der Motordrehzahl n oder den Startvorgang.

Im Ausführungsbeispiel lassen sich mit der Brennstoffpumpe 4 und der Wasserpumpe 5 Drücke im Bereich zwischen 5 und 20 bar einstellen. Durch entsprechende Regelung der Pumpen und der Magnetventile mittels des Steuergerätes 32 ist der Dampfgemischdruck $P_D$ in der Dampfgemischleitung den Anforderungen anpaßbar.

Zur Dosierung des Brennstoffdampf/Wasserdampf-Gemisches entsprechend der erforderlichen Motorleistung weist das Injektionsventil 12 Öffnungszeiten im Bereich zwischen 5 und 10 ms auf.

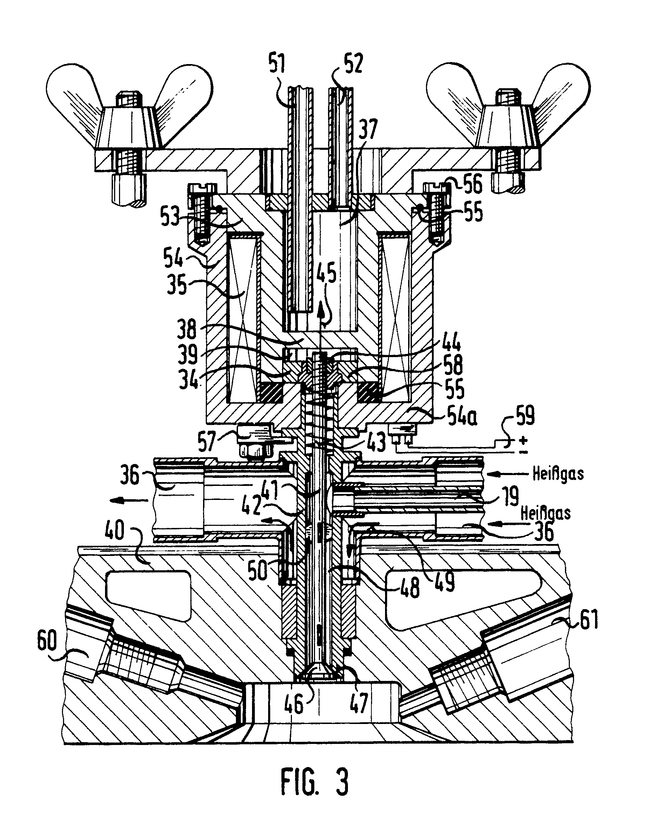

Ein zur Durchführung des erfindungsgemäßen Verfahrens geeignetes elektromagnetisches Injektionsventil ist in Figur 3 schematisch dargestellt. In Figur 3 werden für solche Einrichtungsteile, die schon in Figur 2 schematisch dargestellt sind, die gleichen Bezugszeichen verwendet.

Wesentlich für die Ausbildung des elektromagnetischen Injektionsventils ist einerseits die Erwärmung der Strömungsräume des zum Zylinderraum 13 strömenden Brennstoffdampf/Wasserdampf-Gemisches, andererseits die Kühlung von Magnetanker 34 und Magnetspulen 35, die nicht überhitzt werden dürfen. Hierzu ist im Injektionsventil zum einen der Anschluß 19 für die Dampfgemischleitung 11 innerhalb einer Heizmittelleitung 36 verlegt, zum anderen ist zumindest ein Kühlmittelraum 37 vorgesehen, der in wärmeleitender Verbindung zu Magnetanker 34 und Magnetspulen 35 steht. Zweckmäßig ist im Ausführungsbeispiel der Kühlmittelraum 37 zentral zwischen der Magnetspule 35 angeordnet und reicht mit seinem Boden 38 bis zu einem Magnetankerraum 39, in dem sich der Magnetanker 34 bei Betrieb der Magnetspulen 35 bewegt. In Figur 3 ist die Stellung des Magnetankers 34 bei geöffnetem Injektionsventil dargestellt.

Der Magnetankerraum 39 liegt innerhalb des Wirkungsbereiches des bei Betrieb der Magnetspulen 35 erzeugbaren Magnetfeldes. Zweckmäßig wird er im Randbereich der Magnetspulen 35 so angeordnet, daß eine ausreichende Dimensionierung des Kühlmittelraums 37 möglich ist. Der Magnetankerraum 39 befindet sich am zum Zylinderdeckel 40 hinweisenden Ende der Magnetspulen 35.

Der Magnetanker 34 greift am Ventilschaft 41 an, der in einer Ventilschafthülse 42 geführt ist. Der Magnetanker 34 ist am Ventilschaft 41 zwischen Ventilfeder 43 und einer Spannmutter 44 befestigt. Die Federkraft der Ventilfeder 43 wirkt im Ausführungsbeispiel in Schließrichtung 45 des Injektionsventils, die Magnetkraft entgegengesetzt. Die Magnetkraft ist geringer als die Federkraft ausgelegt.

Am dem Magnetanker 34 entgegengesetzten Ende des Ventilschaftes 41 ist ein Ventilteller 46, im Ausführungsbeispiel ein Ventilkegel befestigt, der bei geschlossenem Injektionsventil mittels der Ventilfeder 43 gegen einen Ventilsitz 47 gepreßt wird. Mit dem Ventilteller 46 wird eine innere Zuleitung 48 für das Brennstoffdampf/Wasserdampf-Gemisch geschlossen, in die der Anschluß 19 mündet. Im Ausführungsbeispiel bilden Anschluß 19 und Zuleitung 48 im Injektionsventil den zu beheizenden Strömungsraum für das Brennstoffdampf/Wasserdampf-Gemisch.

In gleicher Weise wie der Anschluß 19 ist im Ausführungsbeispiel auch die innere Zuleitung 48 für das Brennstoffdampf/Wasserdampf-Gemisch von der Heizmittelleitung 36 umschlossen. Die Heizmittelleitung 36 umgibt die Zuleitung bis nahe an das Ende der Zuleitung 48 am Ventilsitz 47 heran. In der Heizmittelleitung 36 sind in Figur 3 nichtwiedergegebene Strömungsführungen eingesetzt, die das in der Heizmittelleitung 36 strömende Heizmedium in Strömungsrichtung 49 bis zum Bereich des Ventilsitzes 47 leiten. Im Ausführungsbeispiel wird als Heizmittel das Motorabgas verwendet. Die Heizmittelleitung 36 ist jedoch abweichend von Figur 2 nicht mit dem Abgasrohr 18, sondern mit der Rückleitung 65 verbunden. Nach Durchströmen des Injektionsventils wird das Abgas über die Rückleitung 65 zurück in den Abgaskanal 20 geführt, siehe Figur 2.

Der Ventilschaft 41 ist in der Ventilschafthülse 42 innerhalb der Zuleitung 48 axial geführt. Hierzu dienen flügelförmig ausgebildete Führungen 50, die an der inneren Wandseite der Ventilschafthülse 42 gleiten.

Der freie Strömungsquerschnitt im Anschluß 19 und in der Zuleitung 48 ist größer bemessen als der Strömungsquerschnitt zwischen Ventilteller 46

und Ventilsitz 47 bei maximaler Öffnung des Injektionsventils. Die Führungen 50 für den Ventilschaft 41 weisen einen dementsprechend freien Strömungsquerschnitt auf.

Zur Kühlung von Magnetanker 34 und Magnetspulen 35 dient im Ausführungsbeispiel Wasser. Das Kühlmittel fließt über einen Zulauf 51 in den Kühlmittelraum 37 ein und wird über einen Ablauf 52 abgeführt. Im Ausführungsbeispiel befindet sich der Kühlmittelraum 37 in einem als Deckel 53 ausgeführten inneren Teil eines die Magnetspulen 35 aufnehmenden Magnetspulengehäuses. Ein äußerer Gehäuseteil 54, in dem die Magnetspulen 35 eingesetzt werden, wird vom Deckel 53 geschlossen. Zwischen Deckel 53 und äußerem Gehäuseteil 54 sind Dichtungen 55 aus unmagnetischem Material eingesetzt. Mittels Halteschrauben 56 wird der Deckel 53 am Gehäuseteil 54 befestigt.

Der äußere Gehäuseteil 54 des Magnetspulengehäuses ist mit einem Niederhalter 57 mit der Ventilschafthülse 42 fest verbunden. Hierzu ist der Niederhalter 57 am äußeren Gehäuseteil 54 verschraubt und wird an der Ventilschafthülse 42 kraftschlüssig verspannt. Die Ventilschafthülse ist an der Befestigungsstelle des Magnetspulengehäuses in der Weise ausgebildet, daß eine Wärmeübertragung zwischen dem heißen Bereich des Injektionsventiles zur Einführung des Brennstoffdampf/Wasserdampf-Gemisches einerseits, und dem zu kühlenden Magnetspulengehäuse andererseits erschwert ist. Dies wird im Ausführungsbeispiel durch einen möglichst geringen Materialquerschnitt der Ventilschafthülse 42 erreicht.

Um die Bewegbarkeit des Magnetankers 34 im Magnetankerraum 39 zu erleichtern und den Bewegungswiderstand des Magnetankers 34 im mit Kondensat aus Brennstoff- und Wasserdampf gefüllten Magnetankerraum zu verringern, weist der Magnetanker 34 Durchbrüche 58 zum Kondensatdurchtritt auf. Stromzuführungen 59 zu den Magnetspulen 35 sind im äußeren Gehäuseteil 54, im Ausführungsbeispiel im Boden 54a des äußeren Gehäuseteils verlegt.

Im Zylinderdeckel 40 befinden sich neben der Mündungsstelle des Injektionsventils einerseits ein Ansaugventil 60 für Verbrennungsluft, andererseits ein Auslaßventil 61 für das nach Zünden des Brennstoffdampf/Wasserdampf-Verbrennungsluft-Gemisches gebildeten Abgases.

Zum Schließen des Injektionsventils ist die Federkraft der Ventilfeder 43 entsprechend bemessen. Die Federkraft ist größer als die durch den Dampfgemisch druck $P_D$ auf den Ventilteller 46 wirkende Dampfkraft ausgelegt. Darüber hinaus ist die Federkraft - wie bereits angegeben - stärker bemessen als die in entgegengesetzter Richtung wirkende Magnetkraft. Auf diese Weise schließt das Injektionsventil von selbst, wenn die infolge des Kompressionsdruckes auf den Ventilteller in Federkraftrichtung wirkende resultierende Kraft die in entgegengesetzte Richtung wirkende resultierende Kraft aus Dampfgemischdruck und Magnetkraft, die das Injektionsventil offen halten, erreicht bzw. übersteigt. Das Injektionsventil läßt sich auf diese Weise je nach Steuerung der Magnetkraft stets schließen, noch bevor der Kompressionsdruck den Dampfgemischdruck erreicht.

## Ansprüche

1. Verfahren zum Betreiben eines Kolbenmotors unter Zuführung eines unter Druck stehenden Brennstoffdampf/Wasserdampf-Gemisches zum Zylinderraum des Kolbenmotors in vorkomprimierte Verbrennungsluft noch vor Erreichen des oberen Kolbentotpunktes,
**dadurch gekennzeichnet,**
daß das Brennstoffdampf/Wasserdampf-Gemisch in die vorkomprimierte Verbrennungsluft mit einem Druck injiziert wird, der kleiner ist als der höchste Kompressionsdruck und daß bei vorgegebenem Brennstoffgehalt im Brennstoffdampf/Wasserdampf-Gemisch der Injektionsbeginn in Abhängigkeit vom gewünschten Fettungsgrad des im Zylinderraum zu zündenden Brennstoffdampf/Wasserdampf/Verbrennungsluft-Gemisches sowie in Abhängigkeit von verbleibender Druckdifferenz zwischen Druck des Brennstoffdampf/Wasserdampf-Gemisches und Kompressionsdruck im Zylinderraum eingestellt wird.

2. Verfahren nach Anspruch 1,
**dadurch gekennzeichnet,**
daß das Brennstoffdampf/Wasserdampf-Gemisch in den Zylinderraum innerhalb eines variablen, die Öffnungszeit eines Injektionsventils bestimmenden Zeitintervalls injiziert wird, dessen Betrag bei vorgegebenem Brennstoffgehalt im Brennstoffdampf/Wasserdampf-Gemisch in Abhängigkeit vom gewünschten Fettungsgrad des im Zylinderraum zu zündenden Brennstoffdampf/Wasserdampf/Verbrennungsluft-Gemisches eingestellt wird, wobei der Öffnungszeitpunkt des Injektionsventils regelbar, der Schließzeitpunkt vom gegebenen Druck des Brennstoffdampf/Wasserdampf-Gemisches und vom Druckverlauf während des Kompressionshubes bestimmt ist.

3. Verfahren nach Anspruch 2,
**dadurch gekennzeichnet,**
daß das Injektionsventil schließt, wenn der Kompressionsdruck im Zylinderraum den Druck des Brennstoffdampf/ Wasserdampf-Gemisches erreicht..

4. Verfahren nach Anspruch 1, 2 oder 3,

**dadurch gekennzeichnet,**

daß der Öffnungszeitpunkt des Injektionsventils über die Kurbelstellung des Kolbenmotors (Kurbelwinkel) gesteuert wird.

5. Verfahren nach einem der vorhergehenden Ansprüche,

**dadurch gekennzeichnet,**

daß die maximale Öffnungszeit des Injektionsventils durch die maximal zulässige Anfettung des Brennstoffdampf/Wasserdampf/Verbrennungsluft-Gemisches begrenzt ist.

6. Einrichtung zum Zuführen eines unter Druck stehenden Brennstoffdampf/Wasserdampf-Gemisches zum Zylinderraum eines Kolbenmotors in vorkomprimierte Verbrennungsluft noch vor Erreichen des oberen Kolbentotpunktes mit einem in den Zylinderraum mündenden Injektionsventil für das Brennstoffdampf/Wasserdampf-Gemisch, das in einer an einem Dampfgemischerzeuger angeschlossenen Dampfgemischleitung zum Injektionsventil geführt ist, wobei in den Dampfgemischerzeuger eine mit einer Brennstoffpumpe druckseitig ver bundene Brennstoffzufuhr und eine mit einer Wasserpumpe druckseitig verbundene Wasserzufuhr münden,

**dadurch gekennzeichnet,**

daß als Injektionsventil (12) ein regelbares Magnetventil vorgesehen ist und Brennstoffzufuhr (3) und Wasserzufuhr (2) zur Dosierung von Brennstoff und Wasser mit getackteten Magnetventilen (6, 7) ausgerüstet sind.

7. Einrichtung nach Anspruch 6,

**dadurch gekennzeichnet,**

daß das als Injektionsventil (12) dienende Magnetventil Öffnungszeiten im Bereich zwischen 5 und 10 ms aufweist.

8. Einrichtung nach einem der Ansprüche 6 oder 7,

**dadurch gekennzeichnet,**

daß mit der Brennstoffpumpe (4) in der Brennstoffzufuhr (3) und mit der Wasserpumpe (5) in der Wasserzufuhr (2) ein Druck zwischen 5 und 20 bar einstellbar ist.

9. Einrichtung nach einem der vorhergehenden Ansprüche 6 bis 8,

**dadurch gekennzeichnet,**

daß das als Injektionsventil (12) eingesetzte Magnetventil beheizbar, insbesondere vom Abgas des Kolbenmotors (14) beheizbar ist.

10. Einrichtung nach Anspruch 9,

**dadurch gekennzeichnet,**

daß das Abgas nach Beheizung des Injektionsventils (12) als Heizmedium zum Dampfgemischerzeuger (1) geführt ist.

11. Einrichtung nach Anspruch 10,

**dadurch gekennzeichnet,**

daß das Abgas nach Wärmeabgabe zur Erzeugung des Brennstoffdampf/Wasserdampf-Gemisches im Dampfgemischerzeuger (1) einen Rekuperator (21) zur Erzeugung von Warmluft oder Warmwasser durchströmt.

12. Elektromagnetisches Injektionsventil zum Zuführen eines unter Druck stehenden Brennstoffdampf/Wasserdampf-Gemisches zum Zylinderraum eines Kolbenmotors für eine Einrichtung nach Anspruch 6, mit einem über elektrisch wirksame Magnetspulen bewegbaren Magnetanker, der gegen die Kraft einer mechanischen Feder einen Ventilteller öffnet, der von der mechanischen Feder auf einen Ventilsitz gepreßt und damit geschlossen wird, wobei die mechanische Feder am Ventilschaft angreift, an dem einerseits der Magnetanker, andererseits der Ventilteller befestigt ist, und mit einem Strömungsraum für das Brennstoffdampf/Wasserdampf-Gemisch, dessen Ausgang bei Bewegung des Ventiltellers über den Magnetanker zum Zylinderraum des Kolbenmotors hin geöffnet und geschlossen wird,

**dadurch gekennzeichnet,**

daß die Magnetkraft kleiner bemessen ist als die Federkraft der Ventilfeder.

13. Injektionsventil nach Anspruch 12,

**dadurch gekennzeichnet,**

daß der Magnetanker (34) innerhalb eines kühlbaren Magnetankerraumes (39) beweglich angeordnet ist und der Strömungsraum (19, 48) des Brennstoffdampf/Wasserdampf-Gemisches beheizbar ist.

14. Injektionsventil nach einem der Ansprüche 12 oder 13,

**dadurch gekennzeichnet,**

daß der Strömungsraum (19, 48) innerhalb einer Heizmittelleitung (36) verläuft.

15. Injektionsventil nach Anspruch 12, 13 oder 14,

**dadurch gekennzeichnet,**

daß der Strömungsquerschnitt im Strömungsraum (19, 48) größer bemessen ist als der Strömungsquerschnitt zwischen Ventilteller (46) und Ventilsitz (47) bei maximaler Öffnung des Injektionsventils.

16. Injektionsventil nach einem der Ansprüche 12 bis 15,

**dadurch gekennzeichnet,**

daß der Ventilschaft (41) in einer Ventilschafthülse (42) axial geführt ist.

17. Injektionsventil nach Anspruch 16,

**dadurch gekennzeichnet,**

daß der Ventilschaft (41) über eine oder mehrere flügelförmige Führungen (50), die in der Ventilschafthülse (42) an deren Innenwand gleiten, geführt ist.

18. Injektionsventil nach einem der Ansprüche 12 bis 17,

**dadurch gekennzeichnet,**

daß die Heizmittelleitung (36) den Strömungsraum (19, 48) bis nahe an den Ventilsitz (47) heran umgibt.

19. Injektionsventil nach einem der Ansprüche 12 bis 18,

**dadurch gekennzeichnet,**

daß als Heizmittel ein Heißgas, insbesondere Motorabgas dient, und in der Heizmittelleitung (36) Strömungsführungen für das Heißgas vorgesehen sind.

20. Injektionsventil nach einem der Ansprüche 12 bis 19,

**dadurch gekennzeichnet,**

daß der Magnetankerraum (39) an einen mit Wasser oder Öl kühlbaren Kühlmittelraum (37) angrenzt.

21. Injektionsventil nach einem der Ansprüche 12 bis 20,

**dadurch gekennzeichnet,**

daß der Magnetankerraum (39) gegenüber den Magnetspulen (35) mit einer unmagnetischen Dichtung (55) abgedichtet ist.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3734346 (JULICH)<br>* das ganze Dokument *<br>--- | 1 | F02B47/02<br>F02D19/00 |
| Y | US-A-4069794 (JORDAN)<br>* Spalte 6, Zeile 1 - Spalte 6, Zeile 47; Figuren 1, 2 * | 1 | |
| A | | 2, 4, 5, 6, 7 | |
| A | US-A-4145998 (MAHONEY)<br>* Spalte 4, Zeile 36 - Spalte 6, Zeile 8; Figur 1 *<br>--- | 1 | |
| A | US-A-4402182 (MILLER)<br>* das ganze Dokument *<br>----- | 1, 2 | |

| | |
|---|---|
| | **RECHERCHIERTE SACHGEBIETE (Int. Cl.5)**<br><br>F02B<br>F23D<br>F02D |

Der vorliegende Recherchenbericht wurde für alle Patentansprüche erstellt

| Recherchenort | Abschlußdatum der Recherche | Prüfer |
|---|---|---|
| DEN HAAG | 11 OKTOBER 1990 | WASSENAAR G. |